# EUROPEAN PATENT APPLICATION

(11) **EP 1 439 463 A2**
(43) Date of publication of application: **21.07.2004**
(21) Application number: 03076789.1
(22) Date of filing: 10.06.2003
(51) Int. Cl.: G06F 9/44

(54) **A drive controller operator interface**

(30) Priority: 16.01.2003 DE 20300697 U
(71) Applicant: Siemens Aktiengesellschaft, 80333 München (DE)
(72) Inventor: Bone, Dave, Withington Manchester M20 1HS (GB); Prince, Karl, Holmes Chapel, Cheshire CW4 7QG (GB)
(74) Representative: Humphrey-Evans, Edward John

(57) **Abstract**

The present invention relates to drive controllers and to an operator panel for the same. Drive controllers are operable in many industrial plant processors for controlling machinery, for example for the control of conveyor belts, pressing machinery etc. National marketing requirements etc, require the programming of five language capabilities. The present invention provides a memory control option whereby to delete at least one superfluous language capability whereby to increase available memory resource for machinery control.

## Description

### Field of Invention

The present invention relates to drive controllers as used in machinery drives, for motor control and the like. In particular, the present invention relates to a drive controller operator interface.

### Background to the Invention

An industrial plant, to enable machinery to operate, for example, a conveyor belt in a production line, pumps, compressors, ventilation systems, hoisting gear, cranes etc., electric motors are employed. Electric motors may drive machinery directly by means of a clutch, by way of a transmission belt, hydraulic path or some other means. The motor itself may drive a low voltage (< 100Watts) application, such,as a drive for a laboratory centrifuge, or a high wattage (> 300 KW) application such as a steel press. The motors can be DC or AC, single phase or multiple phase.

Electric motors and other electrical devices are typically controlled by inverters which convert input power to control input signals for the motor, or other electrical device. Inverters are controlled by a control panel. The inverters themselves are typically dimensioned as a rectangle box 10 x 15 x 20cm, but - depending on power requirements - may be much smaller or much larger. Conveniently, the converters are packaged with other electrical control equipment. The control panel is programmable whereby to enable to several functions to be performed.

Since the inverter controllers include keyboard controls and LED/LCD displays, it has been found that the controllers represent a significant cost for the inverters. To overcome this or for other reasons such as overall control integration, inverters have been remotely controlled by software using cabling operated on RS232 protocols or similar. However, it has been found in some applications, that cabling is susceptible to interference.

An alternative system is to have single removable keypad/display unit controllers which can serve a number of drives. The single keypad/display unit controller is selectively attached to a number of drives, the instructions downloaded to the drive and then the keypad/display unit controller is removed. Alternatively, a number of removable keypad/display unit controllers may be employed by a limited number of users. One advantage of this type of system is that drives may not be controlled by those not authorised, whether deliberately, accidentally, maliciously or otherwise. These keypad/display unit controllers are known as 'operator panels' (OP) and comprise a memory of up to 512Kb whereby the OP can send instructions relating to a drive to a drive controller. OPs have been found to be sufficiently flexible to accommodate various styles of LCD, such as simple 4-digit displays and are provided with varying numbers of pin-outs, depending on the application.

In use an OP is attached to a drive and co-operating connector pins and sockets (pin-outs) enables signals to be transmitted. An operator of an OP will instruct a memory associate with the drive via the keypad using a serial data-link.. One problem associated with this system is that there is not sufficient memory available whereby either instructions for one controller or copies for a number of controllers cannot be programmed using a single OP.

OPs are small in size - ideally such that they can be placed in pockets or otherwise whereby to be conveniently carried about. A function of the small size is that memory capacity of the OP is limited. A further complication is that full support in five languages is required to enable world-wide products to be economically manufactured. The support of five languages is well established in the market place. In order to enable the 512Kb memory requirement, integrated chip memory elements are employed and printed circuit boards (PCBs) are populated such that cost effective population of the boards is achieved.

### Object to the Invention

The present invention seeks to provide an improved drive controller.

### Statement of the Invention

In accordance with the first aspect of the invention there is provided a drive controller operator panel operable to be programmed to store parameter (memory) sets and to download data to a drive controller comprising: a handheld unit having a data input keypad, a display, a memory and a data input/output port wherein the memory is programmed to support several languages; characterised in that the memory may be modified so as to support a limited number of languages or any one language. Conveniently the language delete function is operable upon first usage whereby all language capabilities surplus to requirements may be deleted whereby to maximise use of operator panel memory.

It may be possible to delete the language capabilities from the memory at other times. Conveniently the memory capabilities can be reloaded to the operator panel using PC support tools

### Brief Description of the Figures

The invention may be understood more readily and various other aspects and features of the invention may become apparent from consideration of the following description and the figures as shown in the accompanying drawing sheets, wherein:
Figures 1a and 1b show drive controller and operator panel; and
Figures 2a and 2b show front and reverse faces of a operator panel PCB.

### Detailed Description of Invention

There will now be described, by way of example, the best mode contemplated by the inventors for carrying out the invention. In the following description, numerous specific details are set out in order to provide a complete understanding of the present invention. It will be apparent, however, to those skilled in the art, that the present invention may be put into practice with variations of the specific.

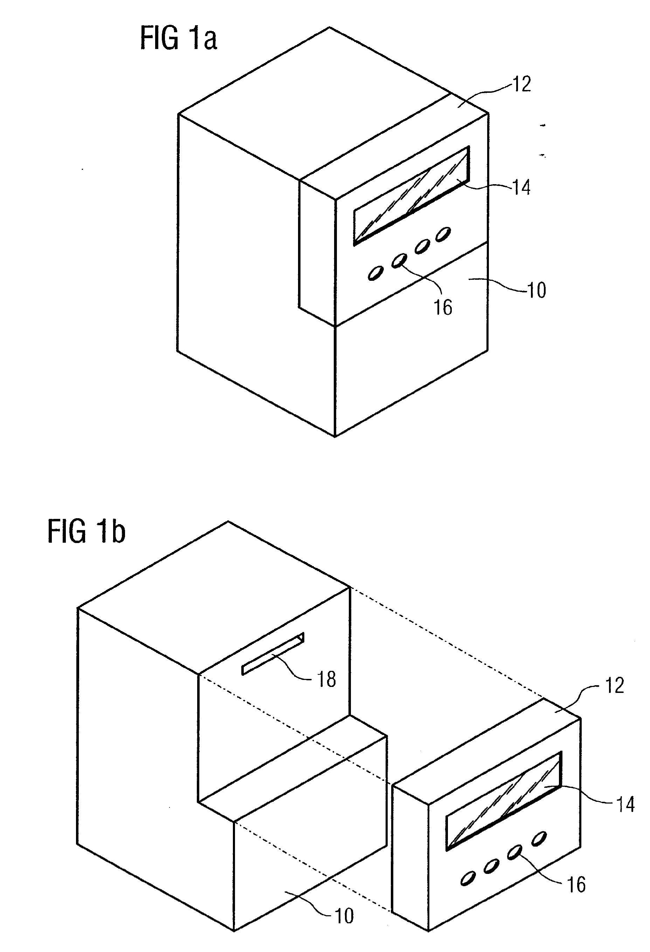

With reference to figures 1a and 1b, there is shown a drive controller 10 with operator panel 12 connected and separated respectively. The operator panel has an LCD display 14 and keypad button 16 for data entry for manipulation. The operator panel for the Siemens MicroMaster ™ range measures 7cms wide by 8cms high by 1cm deep. This size has been found to be conveniently small; easily handled, and can be placed in pockets and the like.

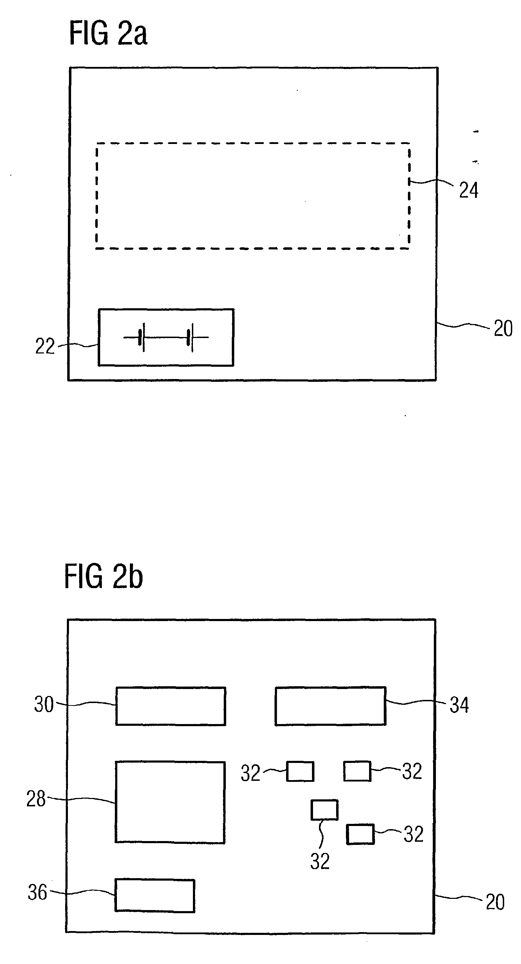

Figures 2a and 2b show front and reverse faces of an operator panel PCB 20 which is placed inside the operator panel body 12. On the outer face there is circuitry with a compartment 22 provided for electrical cells (type CR2032) and a space (indicated by dashed lines 24) is allowed for an LCD display when packaged within the body of the operator panel. The keypad controls are of the membrane type and can be retained in the operator panel casing with a lead to the printed circuit board. On the reverse side an integrated chip 28, memory 30 and various surface mounted components 32 are shown. Connectors 34 and 36 are provided to connected, respectively, with the drive controller 12, and mate with corresponding connector plug 18 and to connect with the LCD display 14. The available memory arising from a 512Kb memory chip for programming functions is reduced by functions such as the ability to work in a number of languages.

In accordance with the first embodiment of the invention there is provided the ability to delete one or more redundant languages whereby to make ~ 80/90 Kb memory available for each language deleted. (The instruction to remove languages is conveniently contained within the user guide for an OP. The unit will function normally without the language deletion up to a point, allowing one drive memory copy (Parameter). To copy the full 10 sets as per the specification of the OP, one or more languages have to be removed.
The deletion of a language is performed using a menu control relating to the selection of the language. Under this menu, use of the special a key combination for example the use of the Fn and T keys would be sufficient. The user is then asked to confirm the deletion, once confirmed the memory is increased by the size of the language support file.

One safeguard that exists is that it is not possible to delete all languages: at least one language capability must be retained. The primary default language is conveniently English, with variation possible to correspond with order/destination requirements. In the event that either none or not all language capabilities are deleted then it would be possible to delete such languages at a later date by using the language selection menu option.
The ability to remove a language means that the user of an operator panel frees up considerable memory space: the design meets market requirements for the support of five languages and enables memory space to be available without the use of separate additional memory being made available. In addition to the negotiation of an additional memory, the hardware and supporting software for the device would need to be changed.

The ability to delete a language means that a minimum specification unit can be delivered in five languages and be expanded to full functionality by deleting a non required language. This allows cost targets to be more easily met without impacting customer expected functionality.

## Claims

1. A drive controller operator panel operable to be programmed to store parameter (memory) sets and to download data to a drive controller comprising a hand-held unit having a data inpuf keypad, a display, a memory and a data input/output port wherein the memory is programmed to support several languages **characterised in that** one or more language capabilities can be deleted.

2. A drive controller operator panel in accordance with claim 1 wherein the language support delete function is operable at any time.

3. A drive controller operator panel in accordance with claims 1 or 2 wherein the operator panel is set up to start in a default language.
